# EUROPEAN PATENT APPLICATION

(11) **EP 4 246 497 A1**
(43) Date of publication of application: **20.09.2023**
(21) Application number: 21891685.6
(22) Date of filing: 29.10.2021
(51) Int. Cl.: G09B 29/00, G01C 21/26

(54) **INFORMATION PROVISION DEVICE**

(30) Priority: 11.11.2020 JP 2020187885
(71) Applicant: Pioneer Corporation, Tokyo 113-0021 (JP)
(72) Inventor: NAKAMOTO, Shogo, Tokyo 112-0002 (JP)
(74) Representative: Grünecker Patent- und Rechtsanwälte PartG mbB
(86) International application number: PCT/JP2021/040063
(87) International publication number: WO 2022/102438

(57) **Abstract**

Information of a facility to be stopped-off on a return trip or the like is presented. An information presentation device (1) includes an outward trip/return trip determination unit (4) determining whether or not a current traveling situation corresponds to an outward trip based on a driving history (D2), and a display device (8) presenting information regarding a facility at which stopping-off on a return trip is predicted based on the driving history (D2) in a case where the current traveling situation is determined to be the outward trip by the outward trip/return trip determination unit (4).

## Description

### TECHNICAL FIELD

The present invention relates to an information presentation device which presents predetermined information.

### BACKGROUND ART

A navigation device which guides a vehicle or the like to a destination searches a route to a point designated by a user as a destination, displays a search result with a map of surroundings of a vehicle position, and guides the user to the destination.

Further, in the navigation device, it is proposed to present a place to stop off other than the destination to the user based on a departure place and a destination. For example, in Patent Document 1, a candidate of the place to stop off is extracted, and weighting is performed with respect to the extracted place to stop off based on a distance between a registered point such as own home or the like and a current position, or a distance between the registered point and the destination, and a margin time. Then, it is described that proposal information of the place to stop off is generated, based on a result of weighting, and that a route in a case where the place to stop off is stopped-off is searched based on generated proposal information on the place to stop off.

### CITATION LIST

### Patent Document

[Patent Document 1] Japanese Unexamined Patent Application Publication No. 2019-168277

### SUMMARY OF THE INVENTION

### Technical Problem

In the invention described in Patent Document 1, a route in a case where a place to stop off is stopped-off is searched based on a departure place and a destination or the like. However, in Patent Document 1, it is assumed that a place to head to from the departure place such as a company or a place to stay or the like is set as a destination in a case of departing from a departure place such as own home or the like.

In such a case, when going home from the destination, proposal information of the place to stop off is newly generated setting the destination as the departure place and own home as the destination. That is, in Patent Document 1, since there is no concept of an outward trip or a return trip, it is not possible to know, in advance on the outward trip, a facility at which it is possible to stop off on the return trip.

An example of the problems to be solved by the present invention is to present information of a facility to be stopped-off on a return trip or the like.

### Solution to Problem

In order to solve the problem mentioned above, the invention defined in claim 1 includes:
a determination unit determining whether or not a current traveling situation corresponds to an outward trip based on a traveling history of the past, and
a presentation unit presenting information regarding a facility at which stopping-off on a return trip is predicted based on the traveling history in a case where the current traveling situation is determined to be the outward trip by the determination unit.

The invention defined in claim 8 is an information presentation method executed by an information presentation device presenting predetermined information, the information presentation method including:
a determination step of determining whether or not a current traveling situation corresponds to an outward trip based on a traveling history of the past, and
a presentation step of presenting information regarding a facility at which stopping-off on a return trip is predicted based on the traveling history in a case where the current traveling situation is determined to be the outward trip by the determination step.

The invention defined in claim 9 causes a computer to execute the information presentation method defined in claim 8 as an information presentation program.

The invention defined in claim 10 stores the information presentation program defined in claim 9 in a computer-readable storage medium.

### BRIEF DESCRIPTION OF THE DRAWINGS

FIG. 1 is a functional configuration diagram of an information presentation device according to one example of the present invention.
FIG. 2 is a flowchart of an operation of a drive connection unit illustrated in FIG. 1.
FIG. 3 is an explanatory drawing of an example of points of travelling and a route between the points.
FIG. 4 is an example of a traveling history corresponding to FIG. 3.
FIG. 5 is a flowchart which performs determination of a base illustrated in FIG. 2.
FIG. 6 is a flowchart of drive grouping illustrated in FIG. 2.
FIG. 7 is a flowchart of a determination operation of a main destination illustrated in FIG. 2.
FIG. 8 is a flowchart of a determination operation of an outward trip /a return trip illustrated in FIG. 2.
FIG. 9 is an example that information of a base is given.
FIG. 10 is an explanatory chart of an example of a score.
FIG. 11 is an image chart of a route in the example of FIG. 10.
FIG. 12 is a flowchart of an information presentation operation.
FIG. 13 is a flowchart of an operation of an outward trip/return trip determination unit.
FIG. 14 is a flowchart of an operation of an ETA calculation unit.

### DESCRIPTION OF EMBODIMENTS

An inference device according to one embodiment of the present invention will be explained below. In an information presentation device according to the one example of the present invention, a determination unit determines whether or not a current traveling situation corresponds to an outward trip based on a traveling history of the past, and in a case where the current traveling situation is determined to be the outward trip by the determination unit, a presentation unit presents information regarding a facility at which stopping-off on a return trip is predicted based on the traveling history. Thus, when the current traveling situation is determined to be the outward trip, it is possible to present information regarding a facility to be stopped-off or the like on a return trip. On the outward trip, by presenting the information regarding the facility to be stopped-off or the like on the return trip, it is possible to make a plan on the return trip or the like in advance, and convenience of a user can be improved.

Further, a name of the facility and estimated time of arrival at the facility may be included in the information regarding the facility at which stopping-off is predicted. Thus, it becomes easier to make a plan of a case where the user or the like actually stops off at the facility.

Further, in addition to the name of the facility and the estimated time of arrival, associated information regarding the facility or a route to the facility may be included in the information regarding the facility at which stopping-off is predicted. In this manner, the associated information such as, for example, information of a limited-time sale of a supermarket, time period regulation information, and congestion prediction information of the route to the facility to be stopped-off can be presented in advance.

Further, the presentation unit may also present information regarding a facility at which stopping-off on the outward trip is predicted together with the information regarding the facility at which stopping-off on the return trip is predicted. Thus, it is possible to present the facility at which stopping-off is predicted on the outward trip and that on the return trip, and the convenience of the user can be further improved.

In addition, based on history information including information of a place of departure, a place of arrival, and staying time at the place of arrival, information of a base, a main destination, and the outward trip or the return trip may be added to the traveling history for each place of arrival. In this manner, it is possible to identify, for example, a point to be the base such as own home or a point at which the staying time is long such as a company. Then, since whether the point was stopped-off on the outward trip or the return trip at a time of traveling in the past can be determined, it is possible to effectively use the traveling history when the traveling history is presented by the presentation unit.

Further, the determination unit may determine that a current traveling situation is an outward trip in a case where a main destination has not been passed by after departing the base. In this manner, it is possible to easily determine that the traveling situation is the outward trip, as far as the point such as the base or the main destination is identified.

In addition, the estimated time of arrival may be predicted considering at least the staying time at the main destination. In this manner, for example, in a case where the main destination is the company, it is possible to predict time of arrival on the return trip from the company. Therefore, it is possible to make the plan or the like on the return trip in advance.

Further, in an information presentation method according to the one example of the present invention, in a determination step, it is determined whether or not the current traveling situation corresponds to the outward trip based on the traveling history of the past, and in a case where the current traveling situation is determined to be the outward trip by the determination step, the information regarding the facility at which stopping-off on the return trip is predicted is presented based on the traveling history by the presentation step. In this manner, when the current traveling situation is determined to be the outward trip, it is possible to present the information regarding the facility to be stopped-off or the like on the return trip. By presenting the information of the facility to be stopped-off or the like on the return trip on the outward trip, it is possible to make the plan on the return trip or the like in advance, and the convenience of the user can be improved.

Further, the above-mentioned information presentation method may be executed by a computer as an information presentation program. Thus, when the current traveling situation is determined to be outward trip by using the computer, it is possible to present the information of the facility to be stopped-off or the like on the return trip. On the outward trip, by presenting the information of the facility to be stopped-off or the like on the return trip, it is possible to make the plan on the return trip or the like in advance, and the convenience of the user can be improved.

Further, the above-mentioned information presentation program may be stored in a computer-readable storage medium. Thus, the program can be distributed as a single unit in addition to being incorporated into a device, and version upgrades or the like can be easily performed.

### EXAMPLE

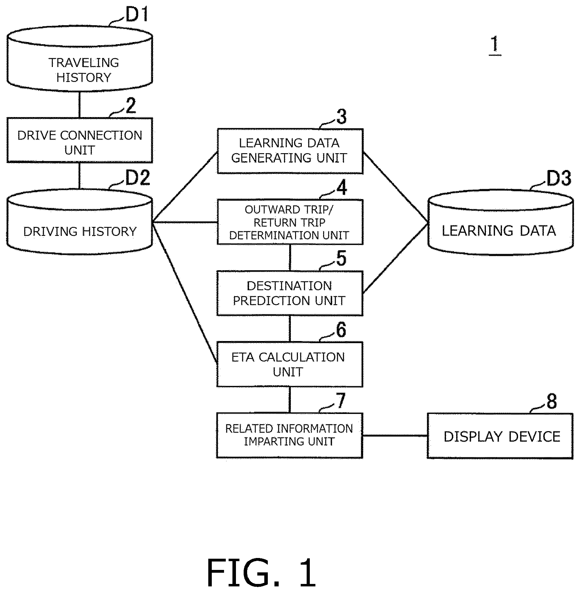

An information presentation device according to one example of the present invention will be described with reference to FIGS. 1 to 14. FIG. 1 is a schematic configuration diagram of the information presentation device according to the present example.

As shown in FIG. 1, the information presentation device 1 includes a drive connection unit 2, a learning data generating unit 3, an outward trip/return trip determination unit 4, a destination prediction unit 5, an ETA calculation unit 6, a related information imparting unit 7, and a display device 8. In addition, the information presentation device 1 includes each data of traveling history D1, driving history D2, and learning data D3.

Note that the information presentation device 1 can be configured of a well-known computer. In this case, the traveling history D1, the driving history D2, and the learning data D3 which are types of data are stored in a storage device. Then, other function blocks are implemented by a computer program (information presentation program) executed by the computer. In addition, the configuration shown in FIG. 1 may not be configured by one device. As the information presentation device, at least the outward trip/return trip determination unit 4 and the display device 8 may be included, and other configuration components may be configured by a server device or the like connected to the information presentation device through a network or the like.

The drive connection unit 2 performs processing to give information of an outward trip/return trip, a main destination, a base, and a drive group based on the traveling history D1, and generates the driving history D2. The traveling history D1 is history information which includes information of a place of departure, a place of arrival (place of visit), time of departure, time of arrival, and staying time or the like.

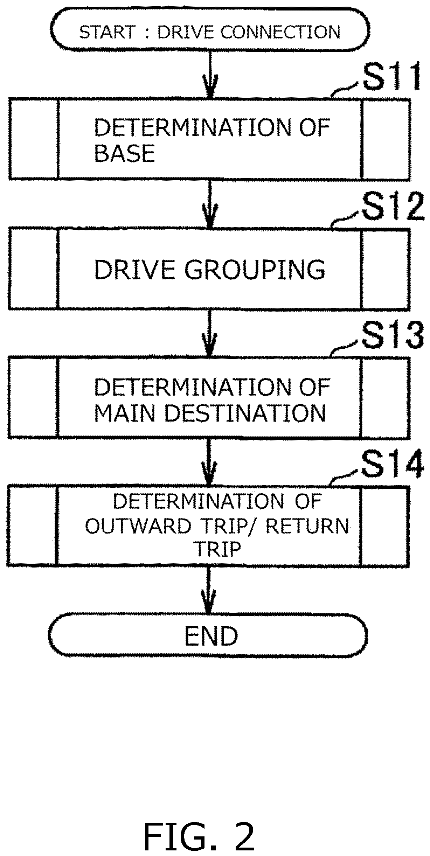

An operation of the drive connection unit 2 will be described with reference to FIGS. 2 - 9. FIG. 2 is a flowchart of a drive connection operation. First, determination of the base is performed (step S11). The base in the present example is a point such as own home or the like at which average staying time in the night time is equal to or greater than a certain amount and the greatest. Next, drive grouping is performed (step S12). Grouping of drives in the present example is processing of making data from departure from a base to arrival at the base one group.

Next, determination of the main destination is performed (step S13). The main destination in the present example is a point at which staying time is the longest in the drive group except the base. Next, determination of the outward trip/return trip is performed (step S14). In the determination of the outward trip/return trip, a route from departure from the base to arrival at the main destination is an outward trip, and a route from departure from the main destination to arrival at the base is a return trip.

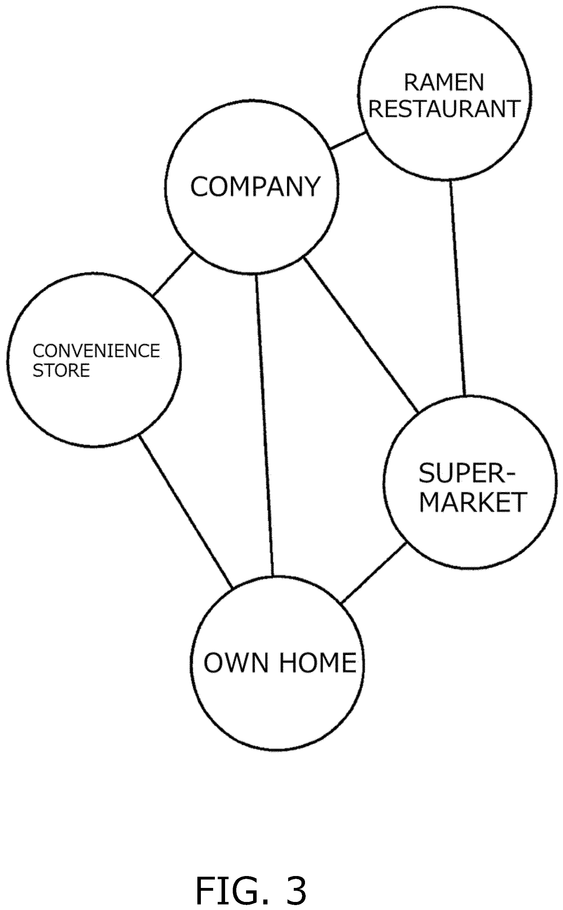

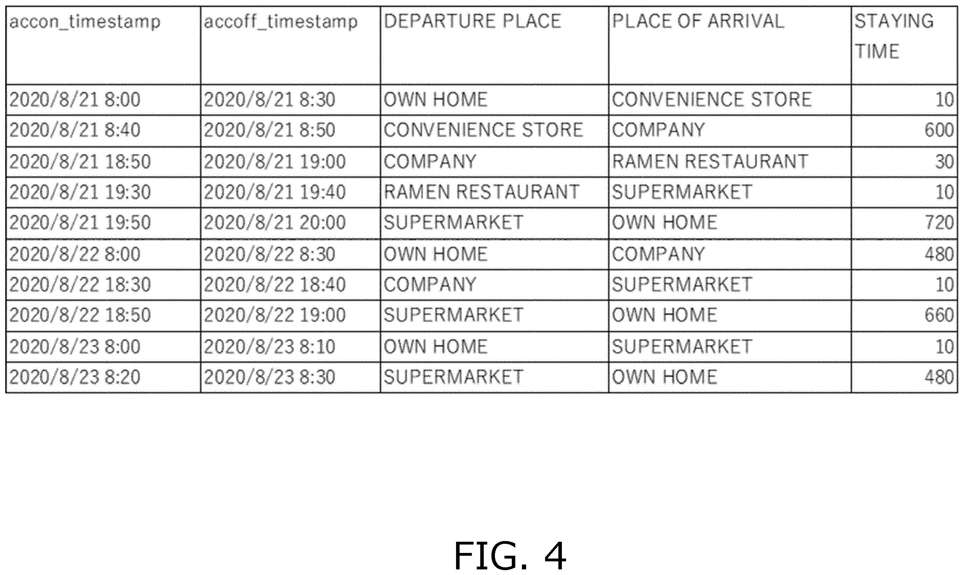

Next, a detailed operation of each step of a flowchart shown in FIG. 2 is explained. For the explanation, an example of points of traveling and a route between the points is shown in FIG. 3, and an example of history information included in the traveling history D1 which corresponds to FIG. 3 is shown in FIG. 4.

In FIG. 3, as points, there are facilities such as own home, a convenience store, a company, a ramen restaurant, and a supermarket. In addition, as routes which are traveled, there are a route from the own home to the convenience store, a route from the convenience store to the company, a route from the company to the ramen restaurant, a route from the ramen restaurant to the supermarket, a route from the supermarket to the own home, a route from the own home to the company, and a route from the company to the supermarket.

FIG. 4 is an example of the history information of the actual traveling history D1 which corresponds to FIG. 3. In FIG. 4, time at which ACC (accessory switch) of a vehicle is on (accon_timestamp), time at which the ACC of a vehicle is off (accoff _timestamp), the departure place, the place of arrival (place of visit), and the staying time are shown. In FIG. 4, the time at which the ACC is on is the departure time, and the time at which the ACC is off is arrival time.

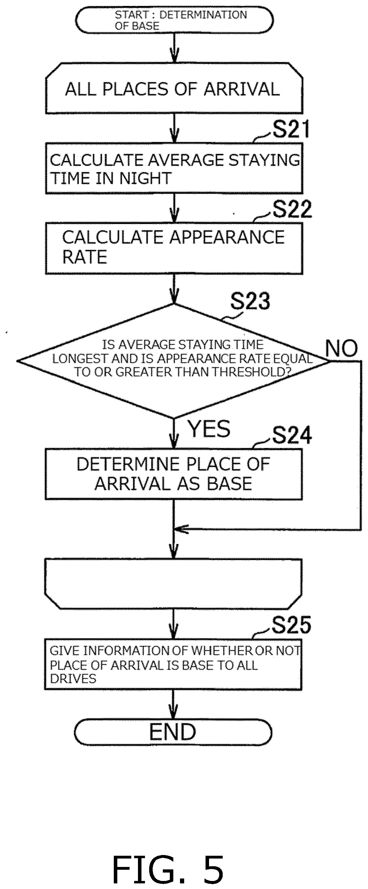

FIG. 5 is a flowchart which performs the determination of the base. The flowchart of FIG. 5 repeats steps S21 - S24 below with respect to all of places of arrival. First, regarding a place of arrival to which an evaluation is applied, average staying time in the night time is calculated (step S21). For example, in a case of FIG. 4, since there is no staying time at the convenience store in the night time, the average staying time is 0 minutes. On the other hand, since staying time at the own home in the night time is long, the average staying time at the own home becomes long. Note that, a time period to be defined as the night time may be appropriately set.

Next, an appearance rate is calculated (step S22). The appearance rate is frequency that the place of arrival to which the evaluation is applied appears as the place of arrival. Since it is not appropriate to treat, for example, an inn stayed during a trip in the same manner as a point such as the own home at which staying frequency in the night time is high although the staying time in the night time at the inn is long, the step S22 is a processing to exclude the inn from bases. Then, it is determined if the average staying time at the place of arrival to which the evaluation is applied is the longest and the appearance rate thereof is equal to or greater than a threshold (step S23). In a case where a result of determination in the step S23 is Yes, the place of arrival to which the evaluation is applied is determined to be the base (step S24). On the other hand, the result of the determination in the step S23 is No, the place of arrival to which the evaluation is applied is not determined to be the base.

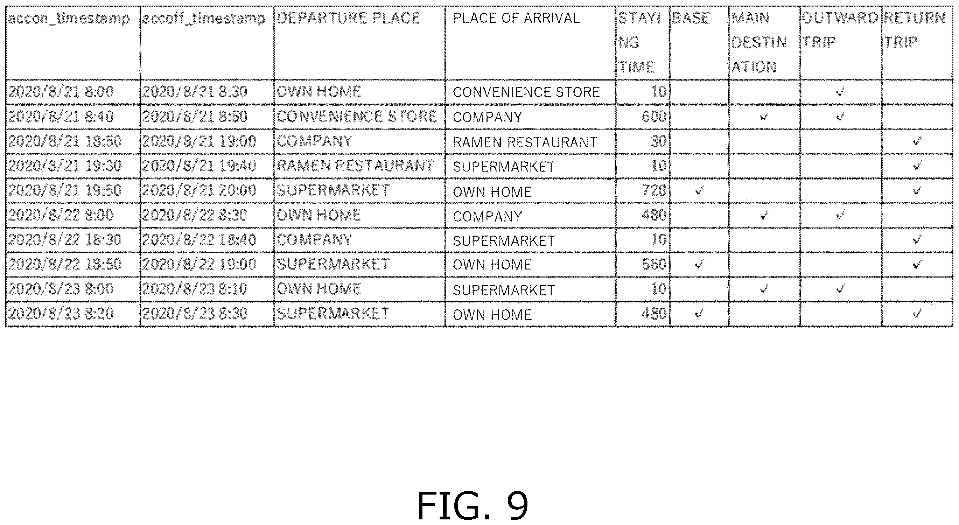

Then, information of whether or not all the places of arrival of drives are the bases is given. Here, a drive in the present example starts when ACC becomes ON, and ends when ACC becomes OFF (one row in FIG. 4). An example that information of the base is given is shown in FIG. 9. FIG. 9 is a table in which information (circular mark) of the base and other information is given to FIG. 4. As shown in FIG. 9, the own home is the base in the example of FIG. 4.

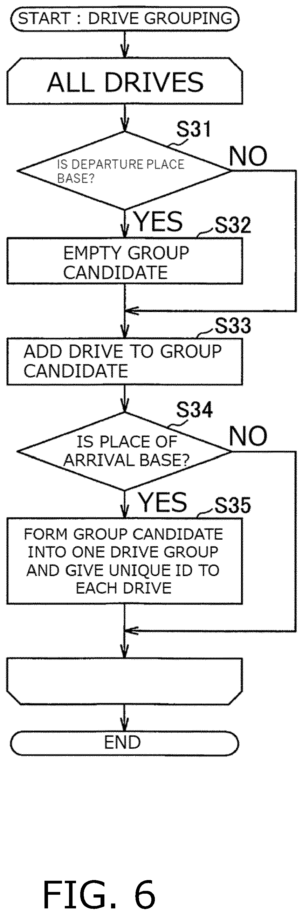

FIG. 6 is a flowchart of an operation of drive grouping. The flowchart of FIG. 6 repeats steps S31 - S35 below with respect to all of the drives. First, it is determined whether or not a departure place of the drive to which the evaluation is applied is the base (step S31). In a case where a result of determination in the step S31 is Yes, a group candidate is made empty (step S32). That is, since grouping of drives is processing of having data from departure from the base to arrival at the base one group, in a case where the departure place is the base, the group candidate is made empty assuming that a new group is starting. Then, the drive to which the evaluation is applied is added to the group candidate (step S33).

On the other hand, the result of the determination in the step S31 is No, the drive to which the evaluation is applied is added to the group candidate (step S33). In this case, since the departure place of the drive to which the evaluation is applied is a point other than the base, the drive is added to the group candidate for grouping.

Next, it is determined whether or not the arrival place of the drive to which the evaluation is applied is the base (step S34). In a case where a result of determination in the step S34 is Yes, the group candidate is set as one drive group, and a common ID or the like is given to each of the drives which form the same group (step S35). That is, the fact that the place of arrival of the drive to which the evaluation is applied is the base means the drive is the last of the drives to be grouped, and therefore, the drives up to the drive to which the evaluation is applied are grouped as one group.

On the other hand, in a case where the result of the determination in the step S34 is No, the place of arrival of the drive to which the evaluation is applied is not the base, therefore, the ID or the like is not given to the drive, and processing from the step S31 is performed again setting a next drive as the drive to which the evaluation is applied.

The drive grouping described above is explained with reference to the example of FIG. 4 as follows. Excluding a row in which item names or the like are stated, with respect to a drive in which the own home is the departure place and a convenience store is the place of arrival in a first row, the departure place is the base, therefore, the drive is added to the group candidate after emptying the group candidate. With respect to a drive in which the convenience store is the departure place and the company is the place of arrival in a second row, the departure place is not the base, therefore, only an operation of adding the drive to the group candidate is performed. The same process is performed for a third row and a fourth row. With respect to a drive in which the supermarket is the departure place and the own home is the place of arrival in a fifth row, the departure place is not the base, therefore, the drive is added to the group candidate, and since the place of arrival is the base, the drives in the group candidate are formed into one group, and a unique ID is given to each of the drives (see group column of FIG. 9). The same operation is repeated with respect to a sixth row and rows thereunder of FIG. 4, and the unique ID such as "2" or "3" as shown in FIG. 9 is given to each group.

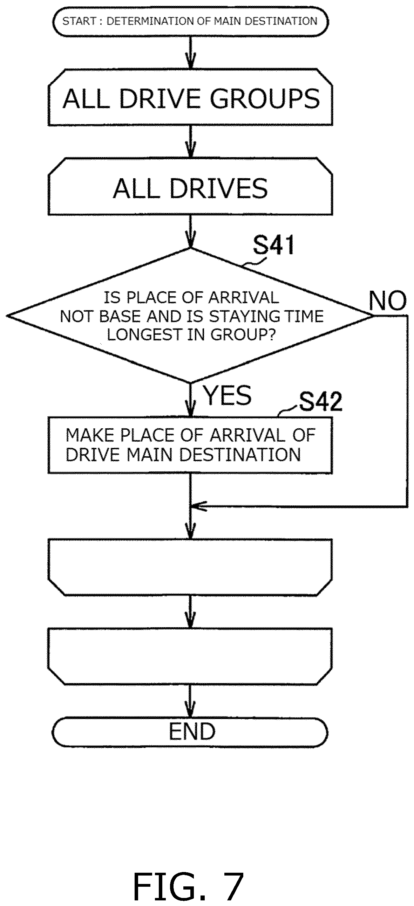

FIG. 7 is a flowchart of a determination operation of the main destination. In the flowchart of FIG. 7, steps S41 and S42 below are repeated with respect to all the drives of all the drive groups. First, it is determined whether the place of arrival is not the base and the staying time is the longest in the group to which the processing is performed in the flowchart of FIG. 6 (step S41). This is to determine a point at which the staying time is the longest in the drive group which is a definition of the main destination except the base.

In a case where a result of determination in the step S41 is Yes, the place of arrival of the drive is the main destination (step S42). On the other hand, the result of the determination in the step S41 is No, the place of arrival of the drive is not the main destination, and evaluation of a next drive is performed. An example of information (circular mark) of the main destination being given is shown in FIG. 9. As shown in FIG. 9, the company is the main destination in the example of FIG. 4.

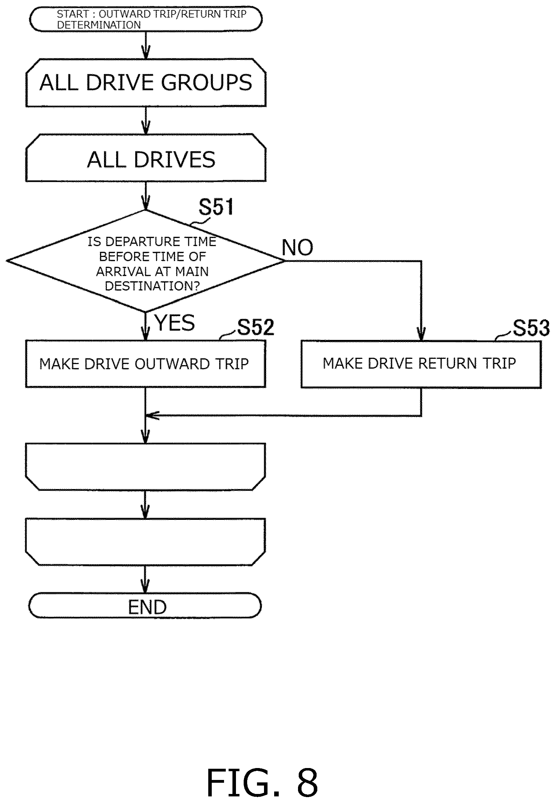

FIG. 8 is a flowchart of an operation of determination of the outward trip/return trip. The flowchart of FIG. 8 repeats steps S51 - S53 below with respect to all of the drives of all the drive groups. First, it is determined whether or not a departure time of the drive to which the evaluation is applied is before estimated time of arrival of the main destination (step S51). In a case where a result of determination in the step S51 is Yes, the drive to which the evaluation is applied is the outward trip (step S52). On the other hand, the result of the determination in the step S51 is No, the drive to which the evaluation is applied is the return trip (step S53). This means it is assumed that, in one group from the base to the base, possibility that the main destination in the one group is a destination of the group is high. That is, the drive to the main destination is the outward trip, and the drive after the main destination is the return trip. An example of information of the outward trip/return trip being given is shown in FIG. 9. As shown in FIG. 9, it is determined that the drive to the company as the main destination is the outward trip, and the drive after the company is the return trip.

When the flowcharts of FIG. 2 and FIGS. 5-8 described above are executed, the driving history D2 shown in FIG. 9 is generated. Then, as is clear from FIG. 9, based on the traveling history D 1 including the information of the place of departure, the place of arrival, and the staying time at the place of arrival, information of the base, the main destination, and the outward trip or the return trip is added to the driving history D2 (traveling history) for each place of arrival.

The learning data generating unit 3 generates the learning data D3 based on a driving history generated by the drive connection unit 2.

The outward trip/return trip determination unit 4 determines whether a current traveling situation is the outward trip or the return trip based on the driving history D2. That is, the outward trip/return trip determination unit 4 functions as a determination unit determining whether or not the current traveling situation corresponds to the outward trip based on a traveling history. The current traveling situation means a state in which a vehicle or the information presentation device 1 mounted in the vehicle is capable of operating such as a state from the time when ACC becomes ON to when ACC becomes OFF or the like, and it is not limited to a state in which the vehicle is actually traveling.

In determination on whether the current traveling situation is the outward trip or the return trip by the outward trip/return trip determination unit 4, an action of moving away from the base without passing by the main destination after departing from the base is determined to be the outward trip based on the driving history D2. Whether the traveling situation is the action of separating from the base may be determined by calculating a distance to the base or ETA (estimated time of arrival) for each certain period of time and checking whether a time average tends to be increasing. Further, whether the outward trip or the return trip may be determined only based on the fact that the main destination has been passed by after departing the base without determining the action of moving away from the base. In addition, in a case where it is not determined to be the outward trip, it may be determined to be the return trip.

The destination prediction unit 5 predicts a destination (facility) in the current traveling situation based on the learning data D3. A combination of learning follows the drive group, and all combinations of the departure place and the place of arrival in the group other than combinations in which the departure place equals the place of arrival are candidates of prediction. That is, the destination predicted by the destination prediction unit 5 is not limited to the main destination described above. For example, in FIG. 3, all of the convenience store, the company, the ramen restaurant, and the supermarket become the candidates at the time of departing the own home. That is, these become candidates of facilities at which stopping-off is predicted.

As a prediction method of the destination prediction unit 5, a context-based method or a link-based method may be used. In the context-based method, a prediction is made by means of, for example, an order of frequencies of places of arrival after departing the own home at eight o'clock in the morning. In the link-based method, a prediction is made by means of, for example, an order of frequencies of places which are reached by passing through a link in front of a house. Note that, the outward trip/return trip, day of the week, weather or the like may also be considered when making prediction.

The ETA calculation unit 6 calculates ETA (estimated time of arrival) with respect to the destination predicted by the destination prediction unit, and outputs the ETA for each predicted destination (facility). With respect to ETA of a predicted destination on which an outward trip/return trip label indicates the return trip when currently on the return trip, the ETA calculation unit 6 calculates (predicts) the ETA in consideration of time taken for travelling a route which passes through a current point and the main destination having the highest score and estimated staying time at the main destination. Here, an average of staying time in past history or average staying time for each time period may be used as the estimated staying time. Further, a link after the main destination may be weighted, and a link weight of current time + a time period after the staying time may be used as information used in such a case. The score indicates a probability of advancing to the predicted destination, and is a value based on the frequency used by the destination prediction unit 5.

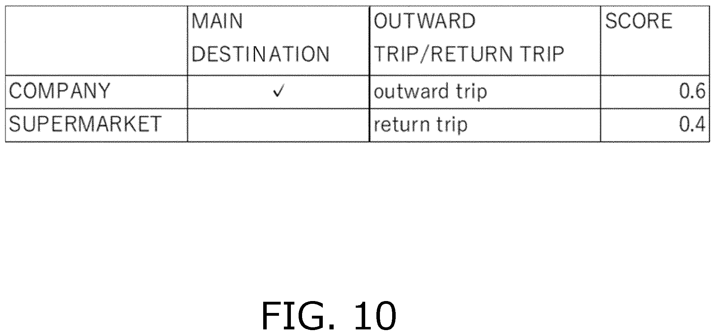

For example, as shown in FIG. 10, in a case where the company is the main destination and a point which was visited on the outward trip, and the supermarket is not the main destination and a point which was visited on the return trip, the score is calculated on the basis of frequency of visit. In a case of FIG. 10, when subjects are only two points (facilities), the scores of the two points have numerical values from which a sum of the scores of the two points becomes "1".

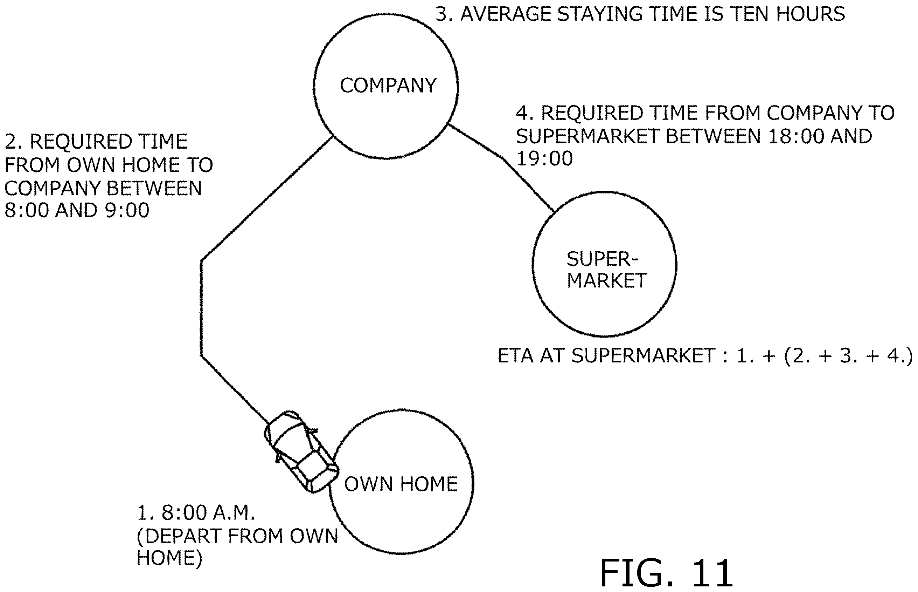

FIG. 11 is an image drawing of a route in the example of FIG. 10. In FIG. 11, in a case of, for example, leaving the own home at eight in the morning and heading to the company, the estimated time of arrival at the supermarket is calculated from required time from the own home to the company between eight o'clock and nine o'clock, average staying time at the company (for example, ten hours), and required time from the company to the supermarket between eighteen o'clock and nineteen o'clock.

The related information imparting unit 7 gives information related to the predicted destination (associated information) which displays a calculated ETA to a predicted destination name (facility name) or ETA of each predicted destination outputted by the ETA calculation unit 6, and outputs the information as information regarding the facility at which stopping-off is predicted. As related information, for example, information on a flyer may be fetched from a website of the supermarket and information of limited-time sale may be given, or time period regulation or congestion prediction information may be given from road information of a route to a predicted facility.

The display device 8 presents information regarding the facility at which stopping-off is predicted outputted by the related information imparting unit 7. That is, in a case where it is determined to be the outward trip by the determination unit, the display device 8 functions as a presentation unit which presents information regarding the facility at which stopping-off on the return trip is predicted based on the traveling history.

The display device 8 may not be limited to a device on which only the information regarding the facility at which stopping-off is predicted is displayed, but may be a display unit which is included in a navigation device, or apparatus such as a display audio and an in-vehicle meter or the like. Further, a portable device such as a smartphone or the like may function as the display device 8. Further, when the portable device is capable of functioning as the outward trip/return trip determination unit 4, it is possible to cause the portable device to function as the information presentation device 1.

Note that in the present example, the display device 8 is explained as the presentation unit, however, presentation of the information regarding the facility at which stopping-off is predicted is not limited to display, but may be presentation by sound.

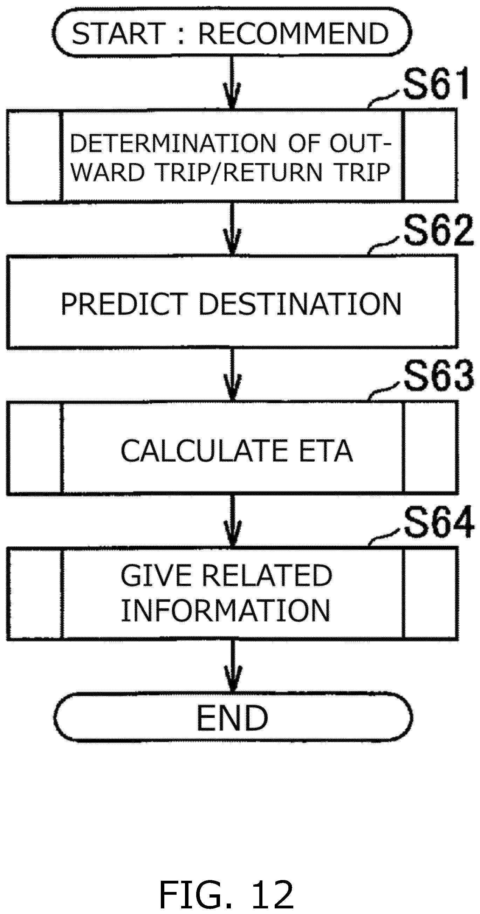

Next, an operation in the information presentation device 1 having the configuration described above will be explained with reference to FIGS. 12 to 14. FIG. 12 is a flowchart of an information presentation operation (recommendation operation). First, whether a current traveling situation is the outward trip or the return trip is determined (step S61). The determination on whether the current traveling situation is the outward trip or the return trip is performed by the outward trip/return trip determination unit 4 with the method described above. Next, the destination is predicted (step S62). Prediction of the destination is performed by the destination prediction unit 5 with the method described above. Next, ETA is calculated (step S63). Calculation of the ETA is performed by the ETA calculation unit 6 with the method described above. Then, the related information is given and displayed in the display device 8 (step S64). The related information is given by the related information imparting unit 7 with the method described above. That is, the step S61 functions as a determination step, and the step S64 functions as a presentation step.

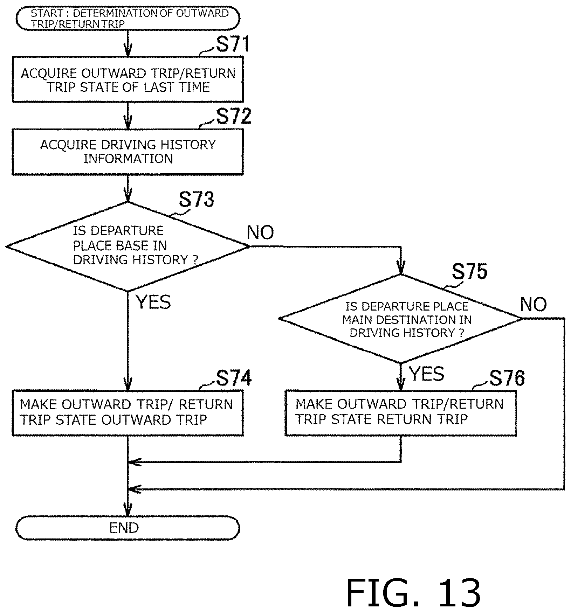

FIG. 13 is a flowchart of an operation of the outward trip/return trip determination unit 4. First, an outward trip/return trip state of the last time is acquired (step S71). "The last time" of the step S71 does not mean a previous travel, but a result of determination made immediately before the current determination. Since recommendation of the predicted destination or the like is constantly updated during an operation of the information presentation device 1, the determination of the outward trip/return trip is performed constantly.

Next, the driving history D2 is acquired (step S72), and whether or not the departure place in the current traveling is the base in the driving history D2 is determined (step S73). In a case where the departure place is the base (step S73: Yes), the outward trip/return trip state is set to the outward trip (step S74). The fact that the departure place is the base means that the main destination is not the departure place, therefore, it is possible to say that the main destination has not been passed by. Further, the fact that the departure place is the base clearly means that the traveling is an action of moving away from the base. Therefore, the current traveling conforms to a condition that a case of an action of moving away from the base without passing by the main destination after departing from the base described above is the outward trip.

On the other hand, in a case where the departure place is not the base (step S73 : No), whether or not the departure place is the main destination in the driving history D2 is determined (step S75). The case where "a result of the step S73 is No" indicates a case where a point at which the departure place is the main destination, or is not either the base or the main destination. In a case where the departure place is the main destination in the driving history D2 (step S75 : Yes), the outward trip/return trip state is set to the return trip (step S76). The main destination is the departure place since it is possible to say that the outward trip/return trip state is the return trip. On the other hand, since a case where the departure place is not the main destination in the driving history D2 (step S75 : No) corresponds to a case where the departure place is not either the base or the main destination (convenience store or supermarket or the like in FIG. 3), a current outward trip/return trip state is maintained without a change.

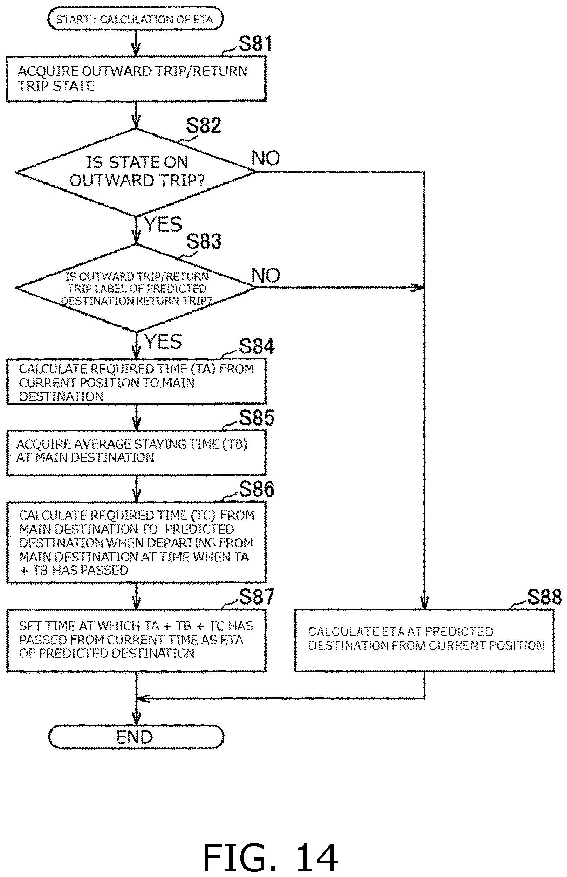

FIG. 14 is a flowchart of an operation of the ETA calculation unit 6. When the outward trip/return trip state is on the outward trip (step S82 : Yes) as a result of the determination in the step S82, whether or not the outward trip/return trip label of the predicted destination on which ETA is calculated is the return trip is determined (step S83). As a result of the determination in the step S82, when the outward trip/return trip state is on the outward trip (step S82 : Yes), whether or not the outward trip/return trip label of the predicted destination on which ETA is calculated is the return trip is determined (step S83). This step S83 determines whether or not the predicted destination to which an ETA calculation is applied is predicted to be stopped-off on the return trip.

Next, the required time (TA) from the current position to the main destination is calculated (step S84). The main destination here is a destination which is considered to be passed by by the predicted destination to which the ETA calculation is applied from the driving history D2.

Next, the average staying time (TB) at the main destination is calculated (step S85). Then, the required time (TC) from the main destination to the predicted destination in a case of departing from the main destination at the time when TA + TB has passed is calculated (step S86). In the step S86, the required time of a case of heading to the predicted destination after arriving at the main destination from the current position and staying at the main destination is calculated. For example, in a case of FIG. 11, the required time of a case of heading to the supermarket between eighteen o'clock and nineteen o'clock, not between eight o'clock and nine o'clock, is calculated.

Then, time at which TA + TB + TC has passed from the current time is determined as the ETA at the predicted destination (step S87). By calculating this way, ETA which takes a case of staying a long time at the main destination into account can be calculated.

On the other hand, the result of the step S82 or S83 is No, ETA at the predicted destination from the current position is calculated (step S88). Since this case is not a case of staying a long time at the main destination, the ETA at the predicted destination from the current position may be calculated.

According to the present example, the information presentation device 1 includes: the outward trip/return trip determination unit 4 determining whether or not the current traveling situation corresponds to the outward trip based on the driving history D2, and the display device 8 presenting the information regarding the facility at which stopping-off on the return trip is predicted based on the driving history D2 in a case where the current traveling situation is determined to be the outward trip by the outward trip/return trip determination unit 4. In this manner, when the current traveling situation is determined to be the outward trip, it is possible to present information regarding a facility to be stopped-off on the return trip or the like. By presenting the information of the facility to be stopped-off on the return trip on the outward trip or the like, it is possible to make a plan on the return trip or the like in advance, and convenience of a user can be improved.

In addition, a name of the facility and estimated time of arrival at the facility are included in the information regarding the facility at which stopping-off is predicted. Thus, it becomes easier to make a plan of a case where the user or the like actually stops off at the facility.

Further, in addition to the name of the facility and the estimated time of arrival, the associated information regarding the facility or a route to the facility is included in the information regarding the facility at which stopping-off is predicted. In this manner, it is possible to present the associated information in advance, such as information of limited-time sale of the supermarket, time period regulation information and congestion prediction information of the route to the facility to be stopped-off.

Further, based on the traveling history D1 including the information of the place of departure, the place of arrival, and the staying time at the place of arrival, the information of the base, the main destination, and the outward trip or the return trip is added to the driving history D2 for each place of arrival. In this manner, it is possible to identify, for example, the point to be the base such as the own home, or the point at which the staying time is long such as the company. Then, since whether the point was stopped-off on the outward trip or on the return trip at a time of traveling in the past can be determined, it is possible to effectively use the driving history when the driving history D2 is presented by the presentation unit.

Further, the outward trip/return trip determination unit 4 determines that the current traveling situation is the outward trip in a case where the main destination has not been passed by after departing the base. In this manner, it is possible to easily determine that the traveling situation is the outward trip, as far as the point such as the base or the main destination is identified.

In addition, the estimated time of arrival is predicted considering at least the staying time at the main destination. In this manner, in a case where the main destination is, for example, the company, it is possible to predict the time of arrival when going home from the company. Therefore, it is possible to make the plan or the like on the return trip in advance.

Note that, the display device 8 may also present information regarding a facility at which stopping-off on the outward trip is predicted together with the information regarding the facility at which stopping-off on the return trip is predicted. In the destination prediction unit 5, it is obvious from the explanation described above that it is possible to predict not only the predicted destination (place to stop-off) on the return trip but also the predicted destination on the outward trip. Thus, it is possible to present the facility at which stopping-off on both the outward trip and the return trip is predicted, and the convenience of the user can be further improved.

Further, the present invention is not limited to the example described above. That is, a person skilled in the art can carry out the present invention in various variations within the scope of the core of the present invention according to conventional knowledge. Such variations are, in so far as the information presentation device of the present invention is included therein, of course, within the scope of the present invention.

### REFERENCE SIGNS LIST

- 1: information presentation device
- 2: drive connection unit
- 3: learning data generating unit
- 4: outward trip/return trip determination unit (determination unit)
- 5: destination prediction unit
- 6: ETA calculation unit
- 7: related information imparting unit
- 8: display device (presentation unit)
- D1: traveling history
- D2: driving history
- D3: learning data

## Claims

1. An information presentation device comprising:
a determination unit determining whether or not a current traveling situation corresponds to an outward trip based on a traveling history of the past, and
a presentation unit presenting information regarding a facility at which stopping-off on a return trip is predicted based on the traveling history in a case where the current traveling situation is determined to be the outward trip by the determination unit.

2. The information presentation device according to claim 1,
wherein a name of a facility and estimated time of arrival at the facility are included in the information regarding the facility at which stopping-off is predicted.

3. The information presentation device according to claim 2,
wherein associated information regarding the facility or a route to the facility is further included in the information regarding the facility at which stopping-off is predicted.

4. The information presentation device according to any one of claims 1 to 3,
wherein the presentation unit also presents information regarding a facility at which stopping-off on the outward trip is predicted together with the information regarding the facility at which stopping-off on the return trip is predicted.

5. The information presentation device according to any one of claims 1 to 4,
wherein, based on history information including information of a place of departure, a place of arrival, and staying time at the place of arrival, information of a base, a main destination, and an outward trip or a return trip is added to the traveling history by the place of arrival.

6. The information presentation device according to claim 5,
wherein the determination unit determines that the current traveling situation is the outward trip in a case where the main destination has not been passed by after departing the base.

7. The information presentation device according to claim 5 or 6,
wherein the estimated time of arrival is predicted considering at least the staying time at the main destination.

8. An information presentation method executed by an information presentation device presenting predetermined information, the information presentation method comprising:
a determination step of determining whether or not a current traveling situation corresponds to an outward trip based on a traveling history of the past, and
a presentation step of presenting information regarding a facility at which stopping-off on a return trip is predicted based on the traveling history in a case where the current traveling situation is determined to be the outward trip by the determination step.

9. An information presentation program that causes a computer to execute the information presentation method according to claim 8.

10. A computer-readable storage medium on which the information presentation program according to claim 9 is stored.
